(19) **Europäisches Patentamt**
**European Patent Office**
**Office européen des brevets**

(11) **EP 3 582 365 B1**

(12) ## EUROPEAN PATENT SPECIFICATION

(45) Date of publication and mention
of the grant of the patent:
**28.01.2026 Bulletin 2026/05**

(21) Application number: **19180173.7**

(22) Date of filing: **14.06.2019**

(51) International Patent Classification (IPC):
**H02J 13/00** (2026.01)    **H02J 3/00** (2026.01)

(52) Cooperative Patent Classification (CPC):
**H02J 3/003; H02J 13/00006;** Y02B 90/20;
Y04S 10/50; Y04S 40/12

(54) **METHOD AND ARCHITECTURE FOR MANAGING THE ENERGY DEMAND OF THE MULTI-AGENT TYPE FOR REDUCING THE PEAKS OF ELECTRICAL CONSUMPTION OF A PLURALITY OF ELECTRICAL APPLIANCES**

VERFAHREN UND ARCHITEKTUR UM ENERGIENACHFRAGE EINES MEHR-AGENTENTYP ZU VERWALTEN UM DIE HOCHS DES ELEKTRISCHEN KONSUMS DER MEHRHEIT DER ELEKTRISCHEN ANWENDER ZU REDUZIEREN.

PROCÉDÉ ET ARCHITECTURE POUR MANAGER LA DEMANDE D'ENERGIE D'UN TYP DE PLUSIEUR AGENTS EN RÉDUISANT LES PICS DE CONSOMPTION DES PLUSIEUR APPAREILS ÉLECTRIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.06.2018 IT 201800006385**

(43) Date of publication of application:
**18.12.2019 Bulletin 2019/51**

(73) Proprietor: **UNIVERSITA' DEGLI STUDI DI CAGLIARI**
**90124 Cagliari CA (IT)**

(72) Inventors:
• **FRANCESCHELLI, Mauro**
**09124 CAGLIARI (CA) (IT)**
• **PISANO, Alessandro**
**09124 CAGLIARI (CA) (IT)**
• **PILLONI, Alessandro**
**09124 CAGLIARI (CA) (IT)**
• **GASPARRI, Andrea**
**09124 CAGLIARI (CA) (IT)**

(74) Representative: **Praxi Intellectual Property Milano**
**Via Mario Pagano, 69/A**
**20145 Milano (IT)**

(56) References cited:
US-A- 6 018 690    US-A1- 2010 038 218
US-A1- 2010 050 002    US-A1- 2012 166 008
US-A1- 2013 262 197

## EP 3 582 365 B1

**Description**

Technical field

This invention relates to a method and a multi-agent control architecture for reducing variations in the absorbed electrical power profile of a plurality of thermostatically controlled electrical appliances. In other words, reducing the peaks in the overall electric power absorbed by the totality of considered electrical appliances, understood as the sum of each single contribution of the power absorbed by the thermostatically controlled electrical appliances considered.

Technological background

The reduction of the cost of energy and the polluting emissions associated with the production of the same is one of the main challenges modern society faces. This is obtained by trying to generate energy levels that meet the energy demand.

The daily energy demand is hard to be predicted as it fluctuates during the day, especially at the peak hours; whenever the base load power levels are exceeded, satisfying the consumption peaks becomes problematic and costly for the electricity distribution companies. Satisfying these peaks requires to call into service auxiliary power generation plants (which are gas or diesel-fuelled) that are more polluting and costly than the base load power plants (see Peaker Plants for details). To mitigate this problem, a possible passive approach consists of discouraging energy consumption during critical time bands (see two-rate time-of-day tariff), other active type solutions are instead hierarchical, and consists on a Supervisory Control And Data Acquisition (see SCADA) which may limit the available electricity to the individual users, or disconnect unessential electrical services and appliances..

One typical example of an electrical appliance that generates high consumption is the *Thermostatically Controlled Load* (TCL) system, used in appliances such as boilers, air conditioners, water heaters and electric radiators, refrigerators and freezers, which account for approximately 45% of all urban and/or residential electricity consumption.

Therefore, systems and methods have been developed to optimise electricity consumption within the scope of Demand Side Management (DSM).

Specifically, reducing urban energy consumption variations by taking active action in relation to the TCLs that represent a portion of the household consumption is of particular interest.

In H. Hao, B. Sanandaji, K. Poolla, and T. Vincent, "Aggregate flexibility of thermostatically controlled loads," IEEE Trans. Power Systems, vol. 30, no. 1, pages 189-198, 2015, a centralized control architecture is proposed to provide flexibility in the energy demand for large numbers of TCLs, for which a stochastic modelling is also provided, to describe the aggregate dynamics of the entire TCLs' population.

are instead hierarchical, and consists on a Supervisory Control And Data Acquisition (see SCADA) which may limit the available electricity to the individual users, or disconnect unessential electrical services and appliances. The approach entails acting in a decentralised manner on individual TCLs, so they collectively follow an optimal consumption profile provided by a centralised information aggregator that collects the data coming both from the energy market and the relevant TCLs.

Both these solutions use stochastic logics, and require a client-server type centralized control and supervision architecture where processing capabilities resides exclusively in the central server.

In S. Grammatico, B. Gentile, F. Parise, and J. Lygeros, "A mean field control approach for demand side management of large populations of thermostatically controlled loads," IEEE European Control Conf., pages 3548-3553, 2015 and in Burger, E. M., & Moura, S. J. (2017). Generation following with thermostatically controlled loads via alternating direction method of multipliers sharing algorithm. Electric Power Systems Research, 146, 141-160, sophisticated architectures for the control of large numbers of TCLs are presented. With respect to the previous solutions, now each TCL is supposed to have autonomous processing and decision-making capabilities, however such solutions depend on the presence of a centralised information aggregator to calculate the consumption profiles of each single electrical appliance.

In M. Franceschelli, A. Gasparri, and A. Pisano, "Coordination of electric thermal systems for distributed demand-side management: A gossip based cooperative approach," 2016, pages 623-630, thanks to the use of innovative "gossip-based , algorithms for estimating in a distributed way the average power consumption of the TCL network it is proposed a method that enables each TCL to autonomously calculate its own planning of powering/unpowering so as to minimise consumption peaks for the network of devices concerned, all regardless of whether there is a centralised information aggregator or not. A limit of the proposed solution is that, for the purposes of optimisation, it requires each TCL must know and be able to communicate its temperature to the other TCLs in the DSM plan: this capability requires "smart" functions, not available in traditional TCLs currently in use in households.

Additional solutions known in the sector are described in US2003/0225483, US9270115, US8626347, and US6906617.

However, it should be noted that none of these solutions include benefits for the community in terms of better management of consumption profiles on a large scale and/or at the urban level. For this reason we can refer to the above solutions as "home DSM" solutions (i.e. DSM at the household level).

With reference to existing large scale DSM methods, an essential feature of the prior art is the need for a central node able to aggregate information coming from the nodes participating in the DSM plan, specifically electrical loads, and to propose scheduling strategies for them that can minimise the consumption profile of all the devices.

US8204633 is referred to in relation to the DSM for large numbers of electrical appliances, specifically for a particular class of TCL such as electrical water heaters. The main limitation of this invention, in addition to the requirement for a central operating unit managed by third parties, is that it is not very interesting in commercial terms. In fact, the water heaters of the users concerned must be replaced with "smart" versions that have computing functions, can communicate and be remotely controlled by the central operating unit. The solution in EP2639920 overcomes this limitation suggesting, that instead of modernising the electrical appliances, smart sockets can be used that can communicate and be remotely controlled by the central operating unit. However, it should be noted that the method in EP2639920 if applied entails simple "demand shifting"; therefore, if it is applied to TCLs, for example, electrical water heaters, it would not guarantee to maintain the water temperature inside the operating range, inasmuch as these smart sockets have neither access to the internal temperature of the TCL, nor the ability to estimate it, nor control it and nor have autonomous decision-making capabilities to overwrite the commands received from the central operating unit.

In short, with reference to large scale DSM solutions that involve heterogeneous devices including TCLs currently existing in the state of the art, the following limits and/or deficiencies have been noted. The first problem is that of having to replace the devices in the DSM with costly re-engineered versions, which makes the solution unattractive for the average user, as it becomes costly.

Furthermore, known solutions require centralised client-server infrastructures to monitor and control users' consumption, and calculate the scheduling profiles of the electrical appliances concerned. This requires both the presence of a speculative mediator in the energy market between the energy supplier and end user; and there are problems tied to the protection of users' privacy inasmuch as consumption is monitored and/or re-modulated by third parties outside the household, for details refer to O. Tan, J. Gómez-Vilardebó, and D. Gündüz, "Privacy-cost trade-offs in demand-side management with storage," IEEE Trans. Inf. Forensics Security, vol. 12(6), pages 1458-1469, 2017.

An additional limit noted is the difficulty in making home automation systems developed by different manufacturers cooperate with each other. These often use different ad-hoc software/control logic, unknown beforehand, which complicates interfacing, hampering system integration and/or the possibility of supporting plug-and-play (a highly sought-after feature for the average user) in a large scale DSM context.

Document US2013/262197 describes a system for managing one or more communities of consumer units. The key element of the architecture is the Community Energy Management system (CEMS), which has the option to measure consumption, and evaluate the quality and price of the electricity supplied. If the quality of the electricity supply is poor or the cost too high or there is a black-out, it may decide to use a backup supply managed by the community in loco. The control and measuring method uses sensors "distributed" in the rooms and monitored remotely by the CEMS. The CEMS interrogates the smart sockets and appliances in the monitored rooms using a communication network. The CEMS interfaces at a local level with the various energy consumer units through a Smart Device Management System (SDMS) module, one for each domestic appliance. SDMS monitors the individual energy consumer units of the electrical appliance it is connected to, aggregates the relevant data on consumption and sends it to CEMS. Furthermore, the SDMS module implements the decisions taken by CEMS for each single electrical load.

Document US2012/166008 describes a controller, called an Energy Management System, that can monitor several electrical loads in various electrical appliances. The Energy Management System, in consideration of the logic based on the load supply priorities of each appliance established by the user through an interface, and on the basis of the information provided by an Energy Generation System, generates power references for each electrical appliance to match the energy demand of each appliance with available energy.

Document US2010/0382018 describes an electrical adaptor with a button to turn the socket on/off on the basis of the user settings. This document also contemplates the possibility of associating a univocal address with the electric adaptor (Address ID 660) so it can be activated by a remote control unit using a wireless signal, and therefore the status of the devices connected in the network can be scheduled on the basis of the times provided by the user and on the basis of logic implemented on the control unit.

Document US2010/050002 describes a controller to implement on the smart sockets that can disconnect an electrical appliance connected to it when it is believed the appliance won't be used by the user, in order to save energy.

Document US6018690 describes a system and method to prevent exceeding the maximum allowed power on a certain electricity line (as an example for domestic power supply). The system consists of a series of sockets to which electrical loads are connected, and a switch upstream of the line. Each socket measures the power absorbed by the load and the maximum power allowed for the line is known and measured. Whenever a socket is turned on, it sends a message to the switch circuit upstream of the line which verifies, on the basis of the maximum allowed power, the maximum power currently measured on the line, the power consumed by the connected load and a list of priorities associated with the sockets, whether the socket can effectively supply electricity to the load connected to it.

Summary of the invention

This invention intends to overcome at least one of the problems proposed with reference to the aforementioned prior art.

According to a first aspect, the invention relates to a method according to claim 1.

This invention therefore relates to a method for monitoring and managing energy consumption, for example household consumption, to minimise fluctuations in global energy consumption of the load profile of the entire electric grid, actively acting on a sub-set of the relevant devices identified as TCL. The network of appliances includes a first sub-set of thermostatically controlled loads (which for the sake of brevity are called TCL electrical appliances) and a second sub-set of non-TCL appliances (i.e. not thermostatically controlled). The latter might also not be present in the network, which may consist solely of TCL appliances.

Therefore, it is a method for managing electricity demand for a plurality of electrical appliances, each having an electrical load that determines a certain consumption.

Each TCL electrical appliance can be in a powered state (ON) or in an unpowered state (OFF). In the ON state, there is absorption of electricity, while in the OFF state there is no absorption.

The electrical appliances considered are preferably not of the "smart" type, i.e. there is no requirement that they be smart appliances equipped with controllers to process data or connected to telecommunications networks. They may be traditional appliances usually available on the market.

In general, in order to be able to function, these appliances are connected to the electric grid by means of an electrical socket, i.e. every appliance has a plug that is connected to a socket so that the appliance can be powered or not, consuming a certain amount of electrical power in the ON state.

The consumption of the electrical appliances is managed through the use of smart sockets. Therefore, to manage the appliances according to the method of the invention, a smart socket is associated with each electrical appliance.

Some types of smart sockets are already available on the market, however the smart socket used in the method of this invention has the following features at least.

The smart socket has autonomous processing and communication capabilities.

In particular, the smart socket can autonomously process, communicate and take decisions concerning the on/off status of its switch. The smart socket is connected between the electrical appliance and the mains' socket of the electric grid (for example, a classic wall socket). The smart socket is outside the appliance, in the sense that smart appliances are not necessary and therefore all the functions described below are contained in the smart socket the appliance is "plugged" into, without modifying it. This smart socket can be plugged between the source of the electric current and the appliance, thereby providing the desired functions. Preferably, the connection is "Plug & Play", i.e. the smart socket has software installed in it, so the smart socket can "self-install" without the user having to change any settings or configure it.

The smart socket has a communication interface, wireless communication capability (e.g. IEEE 802.11), and/or Powerline (i.e. IEEE 1901-2010), via home Internet router for example. Any interface that allows communication with a telecommunication network can be used in this invention.

The socket also has a controller. The controller is understood to be any data processing unit, for example a microprocessor or microcontroller with the relevant operating memory. In order to be able to make the subsequent estimates, as described below, the socket has one or more sensors to measure the absorbed power. For example, the socket must be able to measure the power absorbed by the electrical load connected thereto with a scanning frequency in the order of 0.1 Hz, or higher.

Lastly, the smart socket must be able to autonomously turn the electrical appliance on, i.e. it must be able to determine when to supply power to the same or not. Therefore it includes, or controls, a switch to turn the power supplied to the appliance from ON to OFF, but not vice versa as the TCL can only be powered if the status of the socket switch is ON, and if its internal thermostatic control provides for it. The socket can operate the aforesaid switch at a frequency in the order of 0.1 Hz or higher. Preferably, but not necessarily, the smart socket can provide for the possibility of controlling said switch remotely as well.

Preferably, but not necessarily, the smart socket also consists of the following: a primary memory (e.g. RAM, ROM, Cache) and a secondary memory (mass memory, swap); an external power supply and a buffer battery (e.g. AC/DC adapter, backup battery).

Through the communication interface, the smart sockets create a "peer-to-peer" (or P2P) network, as described in detail below. The proposed DSM architecture is fully distributed, and it comprises a network of anonymous point-to-point connections between smart sockets, one for every electrical appliance in the DSM plan. Therefore, the network of smart sockets requires no central node.

A P2P or 'peer-to-peer' network is a logical architecture of an IT network in which the nodes are not hierarchized solely in the form of fixed clients or servers, but also in the form of *equivalent* or *peer nodes,* able to function simultaneously as clients and servers for the other terminal nodes (hosts) of the network.

With this configuration, any node can start or complete a transaction. Equivalent nodes can differ in terms of the local configuration, processing speed, bandwidth and the amount of data stored.

The classic P2P example is a file sharing network.

Smart sockets are connected to each other through a P2P network as defined above, therefore a central server and/or central information aggregator is not required. In addition, not all the smart sockets communicate with all the other smart sockets, i.e. direct communication is possible only between some of them.

The P2P network can be set up in any way. For example, the smart sockets are connected to Internet. The connection can be hard wired or Wi-Fi. Any transmission standard can be used, for example GSM or 4G.

This network can be used to autonomously establish random connections between "peers" on a Virtual Private Network or VPN, with no need for multi-hop routing between the smart sockets (see, e.g. structured and unstructured peer-to-peer networks, for example "BitTorrent", "Gnutella V0.4", "FastTrack", "eDonkey"/"Overnet").

Some advantages of this type of communication network are that there are no restrictions concerning the positioning of the nodes (= smart sockets) with respect to network topology, and adding or removing nodes is a simple operation (see the possibility of associating the smart sockets with the electrical appliances in Plug&Play mode).

Additionally, this type of network makes it possible to manage nodes with highly transient behaviour (high join/leave rates). Through a continuous and anonymous exchange of information, together with appropriate cooperative control logic, the smart sockets can be used to modify short-term electricity demand for the appliances concerned.

On the basis of the preferred implementation, the peer-to-peer network is a logical interaction/communication structure implemented on Internet, the topology of which is represented at a generic instant in time by a graph consisting of a finite set of equal nodes $V=\{1,2,...,n\}$ (called peers, in the specific case the controllers with decision-making and communications capabilities implemented within the smart sockets) and a number of arcs $E \subseteq V \times V$, defined as pairs of nodes (i,j). Each arc represents the point-to-point communication capability from the i-th node to the j-th node, with i and j belonging to the set V of nodes. The generic node "i" can communicate with one or more nodes in the network. The set of nodes with which the i-th node can communicate is called a set of neighbours. The communication capability between the i-th node and its neighbours is calculated when the "i" node knows the IP addresses of its neighbours. The network topology, and the set of neighbours of each node may change in time, as nodes enter or exit and/or with the addition or loss of graph arcs. The set of neighbours of the i-th node is a sub-set limited to at most k nodes that share an arc with node "I" and that belong to the network. No node knows the topology and composition of the network.

The network thus created, does not necessarily have to comprise smart sockets only. In other words, there may also be "smart" electrical appliances connected to the grid itself and also cooperating in the method of the invention to reduce variation in the total profile of the electrical power absorbed by the plurality of electrical appliances considered, in other words to minimize the energy peaks of said profile. The global network can therefore consist of smart sockets and smart electrical appliances, all of which operate according to the same load management algorithms.

Once the connection is made, preferably after the aforementioned "self-installation" process, the controller of each smart socket operates in the following way. Each smart socket, with regard to the electrical appliance connected thereto, for example on the basis of operations for monitoring the consumption of the electrical appliance connected thereto, calculates an estimate for future consumption in a sliding time window of known length.

The term "time window" means a time interval of fixed duration. The term "sliding time window" means a time window in which the initial instance is the current time instant and the final instant is the instant in time equal to the current instant plus the duration of the time window.

Preferably, the sliding time window will have multiple time slots. In other words, the smart socket estimates a consumption profile in the forecast time window, or estimates a consumption value for each time slot in the same. This forecast comprises, for TCL electrical appliances, determining in which portions of the future time interval considered (or forecast window) the appliance will be ON and in which portions of the future time interval considered the appliance will be OFF, as well as preferably information on the levels of power absorbed when powered, thanks to the information provided by the device that measures the power absorbed integrated in the smart socket.

The estimate will therefore forecast the expected consumption within the time interval considered. This type of estimate is based exclusively on past values of electrical consumption. In other words, the estimate is based on the electrical power consumption values of the electrical appliance associated with the socket in a past time interval in which the smart socket was able to take direct measurements, through the appropriate integrated power sensor.

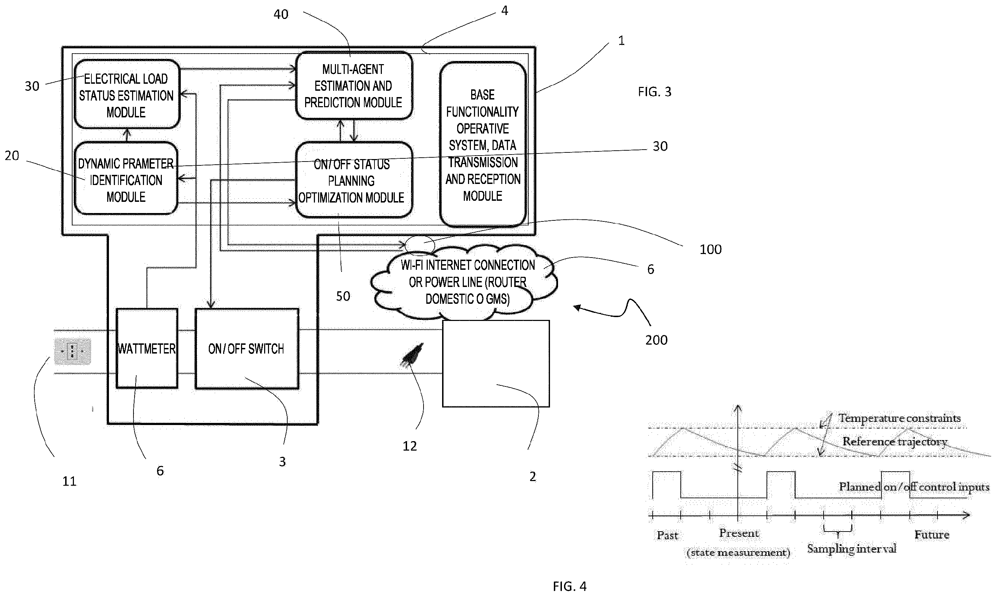

The process of estimating the expected power consumption in the forecast window changes on the basis of whether the electrical appliances are identified as TCL or not. For TCLs, the process can consist of a forward estimate of consumption based on information obtained thanks to the monitoring of the autonomous ON/OFF and OFF/ON switching of the TCLs, i.e. not forced by the smart socket, interpolated with the data expected from a possible dynamic modelling of the behaviour expected from the TCL, as shown in annexed Figure 4. For example, the identification of an autonomous shift from ON/OFF (respectively OFF/ON) in the past by the TCL provides the certainty that the internal temperature of the TCL was equal to its maximum value (respectively minimum).

In a preferred example of the embodiment, this information is interpolated with the time spent switching, together with information on the decay/charge time expected for the temperature of the TCL, identified through appropriate software modules capable of identifying the dynamic parameters of the TCL, it is thus possible to estimate the future scheduling of the TCL and hence its expected consumption.

The dynamic parameters of the TCL are identified autonomously by the smart socket, in the "self-installation" phase through consumption monitoring operations. The term "dynamic parameters of the TCL" means, for example, the time constant "$1/\alpha$" associated with the charging/discharging process of the TCL temperature and the gain of the system $\frac{\beta \cdot q}{\alpha}$, this approximating the internal dynamics of the state of the TCL as described by a dynamic law of the type

$$y(t_{k+1}) = y(t_k) \cdot e^{-\alpha \cdot dt} + \frac{\beta \cdot q}{\alpha}\left(1 - e^{-\alpha \cdot dt}\right)$$

where $y(t_k)$ indicates an estimated current fictitious temperature for the TCL, as described in the preferred example. The details of these estimates can be found in the description of a detailed embodiment example. The term "dynamic parameters" means the parameters that describe the operating dynamics of the TCL system and smart socket.

If the device is not a TCL, a possible estimating process may be that of assuming constant power absorption throughout the forecast time window equal to the value of power absorbed at the current instant. For example if at the current instant the device is in the ON state, constant consumption will be assumed, equal to the power absorbed in said instant throughout the horizon. If the device is in the OFF state, zero consumption will be assumed throughout the forecast horizon

On the basis of all these estimates on the future consumption profile of each electrical appliance in the forecast time window (or forecast horizon), it is then possible to forecast the average electrical consumption of all the electrical appliances connected to the smart sockets in the network, in the same forecast time window.

The average consumption profile of the entire network of electrical appliances in the forecast time window is estimated cooperatively by all the smart sockets in said "peer-to-peer" communication network, thanks to the computing capacity of the integrated controller module in the smart socket.

The estimate is made by exploiting only information available at the local level provided by each smart socket, for example exploiting distributed computing logic. For this process, the forecasts of the consumption profiles expected at the local level from each appliance are fundamental.

Thanks to the information obtained through the peer-to-peer network from the controllers in the same set of neighbours, each smart socket controller iteratively updates its forecast for the future average consumption of all the electrical appliances considered and periodically sends this forecast to its neighbours. A possible implementation of this process may for example involve exploiting Dynamic Average Consensus algorithms, see M. Franceschelli and A. Gasparri, "Multi-stage discrete time dynamic average consensus," IEEE Conf. on Decision and Control, pages 897-903, 2016 for example. The forecast takes into account all local consumption estimates and determines within the forecast window, i.e. for each time interval on which it is divided, the expected average electrical consumption of the network in that well-determined future time interval within the forecast time window, thus highlighting any peaks therein for some time slots.

This forecast is calculated in cooperation between the controllers integrated in the smart sockets and associated with the electrical appliances, be they TCL or non-TCL (if the latter are present). In other words, the computing power of the controllers of the various relevant smart sockets is exploited to calculate the average global consumption of the network. Of note then is the aspect of cooperation between the various devices that is typical of multi-agent architectures, a peculiarity that distinguishes this invention from the current prior art.

The aforesaid calculation will be able to highlight in which future time intervals critical issues can be expected, related to peaks in the electrical consumption of the appliances in the DSM plan. Specifically, it lets all the smart sockets know the size of the consumption peak, and know when, within the forecast time window, this peak will occur with respect to the current time.

In other words, it lets you know the size of consumption peaks and in how many time-slots they are expected, with respect to the current instant of observation. Subsequently, and limited to the smart sockets associated with TCL appliances, on the basis of the estimated information on the average consumption profile expected for the whole network, and as the dynamic parameters of the TCL are known, each socket will plan/re-plan its own ON/OFF sequence relating to whether or not to interrupt the electricity supply to the appliance associated therewith for each time slot in the forecast time window, in order to minimise average consumption peaks in the forecast horizon.

In other words, in view of the global average consumption trend, estimated by every smart socket, the smart sockets associated with the TCLs will try to re-adapt their own planning, and therefore their own expected local consumption, to minimise power absorption variations overall and hence reduce consumption peaks.

In particular, said operations will be continuously performed during the application of the method described herein.

Preferably, but not necessarily, user configuration features can be provided/integrated on the user's smart sockets, via smartphone for example. If multiple smart sockets can be associated with the same user household, constraints capable of guaranteeing for example, that the maximum contractual power will not be exceeded, and/or meeting particular load requirements scheduled by the user, can be integrated in the DSM process. In this way, the following advantages are obtained. Within the individual user household, the method of the invention makes it possible to avoid exceeding the maximum contractual power for example, preventing typical annoying disruptions in traditional household electricity supply services, in addition to provide advantages to the entire residential and/or urban and/or city community, minimising energy consumption peaks in the short term.

The proposed system can be used to implement methods for managing urban electricity demand in the absence of central units for data collection, monitoring or controlling the network.

In addition, privacy is also protected: The system gives autonomous decision-making, control and cooperation capabilities to each interconnected smart socket, making the exchange of information with third parties otherwise dedicated to system management, unnecessary. Furthermore, communications between smart sockets are preferably anonymous in accordance with P2P interaction/communication architectures. This guarantees the user's consumption data will be kept absolutely confidential.

With this system, existing electrical appliances can be retrofitted by simply plugging the smart socket into the outlet power of the electrical appliance. This drastically reduces the costs necessary for the widespread use of urban DSM methods, limited by the cost/benefit ratio of the hardware/software systems required by standard architectures.

Thanks to its coordination and communication infrastructure, and without any supervisor covered by this patent, each node, i.e. smart socket, can be plug-and-play, i.e. it does not need any particularly preliminary network configuration, and thus does not require specialised technicians for the installation and maintenance of the entire DSM system, further reducing system costs.

The system lets users get more out of their electricity contract, preventing forced interruptions in supply when the maximum instantaneous power consumption is exceeded. In particular, the proposed system prevents exceeding the maximum instantaneous power caused by the simultaneous, random and unnecessary powering of energy-intensive appliances. This lets users reduce their rate, opting for a service with a lower instantaneous maximum power or reduce their own electricity consumption, avoiding interruptions in the electricity supplied imposed by the energy supplier.

The architecture can be expanded to manage also newly designed smart sockets with the minimal functions specified in the description of the smart socket.

The architecture is resistant to Denial of Service (Dos) cyber attacks because eliminating one or more nodes from the network does not alter its emerging behaviour and there are no individual targets such as supervisors/information aggregators. In architectures in which the above are present, eliminating the same compromises the operation of the entire network, making the energy demand management service vulnerable to DoS attacks.

According to a second aspect, the invention relates to a system architecture according to claim 10.

The advantages of the second aspect have already been clarified with regard to the first aspect and will not be repeated herein.

According to the first or to the second aspect, the invention alternatively or additionally comprises one or more of the following features.

Preferably, said architecture is a control architecture, which operates on a P2P network.

I.e., the architecture of the smart sockets does not require a central coordinator/server to make the decisions. In other words, in a central architecture all the sockets must communicate with the latter, and the server takes decisions for all the sockets. Server malfunctions affect the entire system and therefore the operation of all clients/smart sockets.

Preferably, the planning phase of the future sequence/planning of the powered periods and of the unpowered periods in the sliding time window, in order to minimise said total network average consumption estimate, is calculated solely at a local level by the smart socket associated with the TCL electrical appliance.

With reference to the control architecture of the invention, this is distributed in the sense that changes to the operation of the electrical appliance are made locally by each single smart socket, on the basis of the estimates on global average consumption in the same sliding time window calculated cooperatively, i.e. exchanging data and estimates calculated at the local level and reiterating them, exploiting communication with the other sockets. The sockets can communicate with some but not all the other smart sockets in the network, in other words the sockets can only communicate with the sockets in the same set of neighbours.

The architecture continues to function even if one or more smart sockets "disconnect" from the network, for example if the connection is lost or power is disconnected, for example by unplugging the sockets from the wall socket.

Preferably, the step to forecast a future average consumption in said sliding time window of the plurality of electrical appliances will be done through the controller of all the smart sockets connected at a given instant to the peer-to-peer network through subsequent iterations between the same smart sockets. Each socket can only dialogue with sockets in its own set of neighbours.

Decisions are taken in a cooperative way, i.e. exploiting the computing power of all the smart sockets, which make calculations, exchange information with each other, and take decisions to minimise the estimated consumption for all the appliances concerned.

The multi-agent architecture on a P2P communication infrastructure has the advantage of protecting users' privacy because packets are not routed. Another advantage of P2P networks is that they can manage highly transient networks, i.e. with particularly high node join/leave rates.

Preferably, locally estimating future electricity consumption for the electrical appliance associated with the smart socket, in a sliding time window, said estimate being carried out solely on the basis of the values of the appliance's previous electrical consumption, includes the step of monitoring the electrical consumption of the appliance for a determined time interval.

The estimate of the future consumption is based on the estimate of the current state of the appliance and the mathematical model of its consumption, created in consideration of archived past consumption data.

Note that both TCL and non-TCL appliances can be connected to the peer-to-peer network.

Preferably, forecasting average consumption includes:

- Determining the consumption of the set of devices at any instant in the time window, divided by the number of devices.

It's important to forecast the consumption as said forecast can show in which time intervals of the forecast window, in other words in which instant in time in the future, peaks in consumption are expected.

Preferably, for each smart socket associated with a thermostatically controlled load TCL electrical appliance, planning the future sequence of the powered periods and unpowered periods in the sliding time window to minimise said future expected average consumption estimate associated with all the TCL and non-TCL electrical appliances concerned, includes.

- Minimising the consumption peaks expected in determined future instants in time in relation to a current time, by making changes to said sequence.

More specifically, planning the future sequence of the powered periods and unpowered periods includes locally minimising the peaks on the basis of the total average consumption estimate at determined future instants in time in relation to a current time, by making changes to said sequence of states of that particular switch, which switches power supplied to the TCL appliance it's connected to, on or off.

Said minimisation is preferably done by including an optimisation software module in the controller functions of each smart socket to solve linear programming problems with mixed variables. The GLPK open-source ANSI-C library is used, for example.

Downstream of the optimisation process, each smart socket associated with a TCL updates its own scheduling. If weighted with the value of the nominal power absorbed by the TCL, said scheduling is equivalent to an estimate of the local consumption profile of the individual TCL.

Subsequently, said new consumption profile expected in the forecast time window will be communicated by the smart socket to the nodes with which it can communicate in said P2P network. Said new planning will therefore influence and hence modify the new global average consumption profile estimated by the network of smart sockets, in the forecast sliding time window.

The expected behaviour will then be that the new ON/OFF sequence will reduce the expected consumption peaks for the average global consumption profile.

For further details on the functional character of the generic control logic based on a sliding forecast time horizon, please refer to the paper [A. Bemporad and M. Morari, "Control of systems integrating logic, dynamics, and constraints," Automatica, vol. 35, no. 3, pages 407-427, 1999].

Preferably, estimating electricity consumption for each smart socket in a sliding time window includes:

- Measuring the effective electricity consumption in a past time interval of said electrical appliance;
- Estimating the electricity consumption profile in a forecast window, on the basis of said measurements taken in said past time interval.

Preferably, forecasting an average consumption in said future time window of the electrical appliances includes:

- forecasting an average future consumption for each time-slot in said future time window for the electrical appliances by using a dynamic average consensus algorithm, considering the network of smart sockets as a multi-agent system.

This type of algorithm is known in the art. A multi-agent algorithm can forecast average consumption. For example, the algorithm used is described in [M. Franceschelli, A. Gasparri "Multi-stage discrete time dynamic average consensus", IEEE Conf. On decision and Control, pages 897-903 (2016)].

In addition, the method includes the following step:

- Updating the forecast of an average consumption in said future time window of the electrical appliances on the basis of the sequence of the powered periods and unpowered periods, modified for each appliance.

The future forecast is substantially interactive and iterative, as each socket must exchange its local estimates with the others, iteratively to reach the correct value of said quantity and at the same time minimise peaks in consumption. In other words iteratively, downstream of each process for estimating the consumption forecast, as the smart sockets connected in the network exchange information (interactions), each socket re-plans its own ON/OFF sequence for the TCL appliance it's connected to in said forecast window, then said estimate is recalculated and updated on the basis of the expected global average consumption. This iteration is repeated until a steady state is reached; the expected result will be that the peaks of the average consumption profile expected in the time window of observation, will be lower than those before the optimisation process.

Preferably, the method includes:

- Setting a minimum or maximum temperature value of an identifying parameter for each TCL electrical appliance;
- Maintaining said identifying parameter between the maximum temperature and minimum temperature in said modified sequence of the powered and unpowered periods.

The identifying parameter (which obviously is a temperature of a certain magnitude) depends on the type of appliance itself. For example, in the case of a water heater, said temperature could be the temperature of the water inside the water heater. In the case of an air conditioner, it could be the temperature of the air in the environment to be air-conditioned.

Preferably, said DSM architecture on the peer-to-peer network is a system that requires neither a central coordinator nor a central database to operate, i.e. a location where the information provided by the smart sockets installed and communicating in said network is collected.

Preferably, said appliance is a water heater and estimating, for each smart socket, an electricity consumption in a future time interval of the associated electrical appliance, includes: estimating the water temperature in said water heater. In particular, a parameter of the internal state of the water heater is estimated as described with reference to the equation (5) discussed below.

Preferably, the future sequence of powered and unpowered periods to locally optimise the profile of the power absorbed by all the electrical appliances will be modified by an optimisation algorithm that minimises the expected load peaks, suitably choosing the sequence of powered and unpowered states in said forecast window.

Preferably, said TCL electrical appliance is a household electrical appliance and more preferably a hot water heater, or a convection heater, air conditioning unit or freezer.

A household electrical appliance is an electrical load for the electricity grid. It may be a large appliance, such as a washing machine, a dryer, a dishwasher, a cooking appliance, an extraction hood, a refrigerator, a combined refrigerator-freezer or an air conditioning unit. However, it may also be a small appliance, such as an automatic coffee maker or a food processor. In particular, the term electrical appliance is understood to mean an appliance that comprises at least one large load. The definition of large load may change according to the application and may, for example, refer to an electrical load with an energy consumption of over 500 Watts for example.

Note that the teachings of this invention can be used to provide an auxiliary service in the form of a virtual power plant, a service provided by an energy provider to optimise energy consumption and/or costs.

Brief description of the drawings

This invention is better described with non-limiting reference to the accompanying drawings, in which:

- Figure 1 is a schematic drawing of a peer-to-peer network used by the smart sockets in accordance with the invention;

- Figure 2 is schematic representation of a smart socket in accordance with the invention;

- Figure 3 is a block diagram of an architecture in accordance with the invention;

- Figure 4 shows a graph with the temperature trend in a TCL appliance and the trend of the unpowered and powered sequence;

- Figure 5 is a block diagram of a step in the method of the invention;

- Figure 6 shows graphs of numerical simulations for three different times of an ON / OFF programming for SPS 9 in a horizon of L = 50 time intervals;

- Figure 7 shows graphs with numerical simulations of the estimated virtual temperature profile for TCL 9 (corresponding to the TCL in Figure 6);

- Figure 8 shows graphs with numerical simulations for 1) top left: a comparison of the energy consumption for the network without (A), and with the proposed DSM control (B). 2), 3), 4) Function profiles of the initial (red), estimated (green) and current (blue) problem of equation problem (10) on the optimisation horizon at different times t = {3; 12; 219} min; and

- Figure 9 shows a comparison between experimental data obtained on energy consumption between 6 autonomous TCLs (C) and the same TCLs that execute the proposed algorithm (D).

Detailed description of an embodiment of the invention

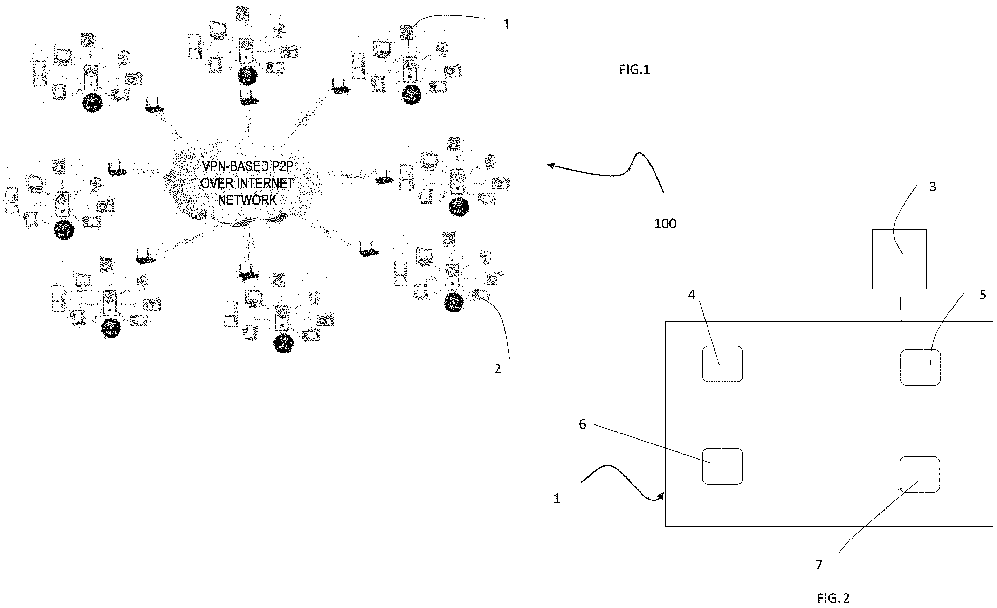

Figure 1, schematically shows a peer-to-peer network 100 consisting of a plurality of smart sockets 1. Each smart socket is associated with an electrical appliance 2, for example any one of those represented in the figure, such as a washing machine, fan, etc.

Below, the type of electrical appliance taken as an example is an electrical water heater, but any electrical appliance can be used.

In Figure 2, smart socket 1 is represented schematically in greater detail. Socket 1 consists of the following: microprocessor 4, memory 5, Internet connection 6 and power sensor 7 to measure the power of electrical appliance 2 with which it is associated.

In Figure 3, an architecture 200 given by the system of electrical appliances 2 - smart sockets 1 connected in network 100 is shown (a single smart socket is shown for the purpose of simplicity). Architecture 200, provides a method for regulating the consumption of electrical appliances 1, in particular to minimise peaks in electricity consumption.

As shown in Figure 3, smart socket 1 is plugged between an electrical socket 11, from which current is supplied to electrical appliance 2 from the normal electric grid, and plug 12 of electrical appliance 2. In addition, smart socket 1 has on/off switch 3, built into or not part of socket 1, which is actuated by socket 1.

Socket 1 is also connected to other sockets, as in Figure 1, through an Internet connection to create the peer-to-peer network 100.

In particular, interface 6 is a module that can exchange autonomous and asynchronous messages with at least one sub-set of microprocessors 4 (with the relevant interfaces 6) corresponding to separate smart sockets 1.

In order to minimise current peaks, the smart socket uses software, installed for example in memory 5, which, processed by microprocessor 4, turns the electrical appliance on and off, by actuating switch 3, with a determined frequency or according to a detailed time programme. In other words, the minimisation is done by establishing in which instants of time the electrical appliance has to be powered and for how long.

For this purpose, a first step 20 of the method includes identifying the dynamic parameters of electrical appliance 2. Below, the electrical appliances described are the TCL type, but non-TCL electrical appliances can also be added to the network. To do so, a modelling of system 200 is produced, including the network 100 of smart sockets 1.

A multi-agent system (MAS) is considered that comprises a population of electrical appliances 2 to which a smart socket is associated. Below, a TLC is taken as an example of electrical appliance. The smart socket, moreover, is hereafter called SPS (Smart Power Socket). The population of TCLs with an SPS is calculated using the following equation $\mathcal{V} = \{1 \dots n\}$ and each these SPSs as shown in Figures 2 and 3, has power sensor 7, controls switch 3, and has an Internet connection interface 6. Smart socket 1 can therefore start communication between its neighbouring agents on P2P network 100. The set of communication links active at time t is calculated using the following equation $\varepsilon \subseteq \{V x V\}$. The topology of the network can be modelled with a graph $\mathcal{G} = \{V, \varepsilon\}$. According to what has already been highlighted and discussed in H. Hao, B. Sanandaji, K. Poolla, and T. Vincent, "Aggregate flexibility of thermostatically controlled loads," IEEE Trans. on Power Systems, vol. 30, no. 1, pages 189-198, 2015] and in [C. Perfumo, E. Kofman, J. H. Braslavsky, and J. K. Ward, "Load management: Model-based control of aggregate power for populations of thermostatically controlled loads," Energy Conversion and Management, vol. 55, pages 36-48, 2012, the temperature variations of the i-th TLC (the temperature variations are understood to be the representative temperature variations of the TCL, for example the temperature variations of the water in a water heater) can be approximated at discrete time instants $t_1$, $t_2$ ... $t_k$, $k \in \mathbb{N}$, as follows

$$T^i(t_{k+1}) = T^i(t_k) \cdot e^{-\alpha^i dt} + \left(1 - e^{-\alpha^i \Delta t}\right)\left(T_\infty^i + \frac{q^i}{\alpha^i} u^i(t_k)\right) \quad (1)$$

Where $dt = t_{k+1} - t_k$ is a constant sampling time interval, $T^i(t_k)$ is the internal temperature of the i-th TCL at time $t_k$, and $u^i(t_k) : \mathbb{R}^+ \to \{0,1\}$ represents the ON/OFF states of the heating element in the TCL electrical appliance. Since an SPS is connected to the power outlet of the TCL, it follows that

$$u^i(t_k) = s^i(t_k) \cdot \delta^i(t_k) \quad (2)$$

In which $s^i(t_k) : \mathbb{R}^+ \to \{0,1\}$ denotes the ON/OFF Boolean state of the SPS and $\delta^i(t_k) : \mathbb{R}^+ \to \{0,1\}$ represents the ON/OFF state of the thermostatic heating element of electrical appliance 2. Clearly, the heating element can only be powered if the SPS is ON and the electrical appliance is also ON. $T_\infty^i$ is the ambient temperature of the i-th TCL, $\alpha_i \in \mathbb{R}^+$ is the i-th coefficient of heat exchange with the external environment, $q^i$ is the heat generated by the electrical heater and $p^i \in \mathbb{R}^+$ is the power consumed by the TCL when it is ON. The TCLs are characterised by a simple hysteresis logic that can maintain the internal temperature within a certain range, for example $T_i \in \left[T_i^{min}, T_i^{max}\right]$ so that

$$\begin{cases} \text{if } T^i(t_k) > T_{\max}^i & \Rightarrow \text{ then } \delta^i(t_{k+1}) = 0 \\ \text{if } T^i(t_k) < T_{\min}^i & \Rightarrow \text{ then } \delta^i(t_{k+1}) = 1 \\ \text{if } T^i(t_k) \in \left[T_{\min}^i, T_{\max}^i\right] & \Rightarrow \text{ then } \delta^i(t_{k+1}) = \delta^i(t_k) \end{cases}$$

(3)

When $u^i(t_k) = 1$ (ON) the power absorption of the TCL is equal to $p^i(t_k) = p^i$ Watts, whereas when $u^i(t_k) = 0$ (is OFF), $p^i(t_k) = 0$.

The TCL systems control the temperature of a fluid. The fluid in question depends on the type of TCL. The appliance is controlled by a thermostat in accordance with equation (3). To forecast their future consumption, which represents step 30 in the method of the invention (see Figure 4), it is preferable to forecast when they are in the ON phase or in the OFF phase. This can be done by estimating their internal temperature and the characteristic parameters of their dynamics identified by equations (1) - (3).

To identify the characteristic parameters of the TLC dynamics solely on the basis of the measured power consumption, the charging/discharging time intervals of the equations (1) - (3) are measured.

Initially, therefore, a TCL at ambient temperature is considered, by turning the SPS off for a sufficiently long time. From this, it follows that $T^i(0) = T_\infty^i$. The TCL is then turned on and the SPS measures the power absorption until $T^i(\Delta t_1^i) = T_{max}^i$, then the TCL is turned off again. $\Delta t_1^i$ represents the cold charging time and it can be measured by the SPS. The SPS then measures the time the TCL takes to power up again and this is called the discharge time $\Delta t_2^i$.

From this, it follows that $T^i\left(\Delta t_1^i + \Delta t_2^i\right) = T_{min}^i$. Lastly, the time taken by the TCL to charge from $T_{min}^i$ to $T_{max}^i$ is measured. This time interval $\Delta t_3^i$ is called the charge time. Replacing these values in equation (1) proves the following relationship between the various time intervals is obtained:

$$e^{-\alpha^i \Delta t_2^i} = \frac{T_{\max}^i - T_\infty^i}{T_{\min}^i - T_\infty^i} = \frac{\frac{q^i}{\alpha^i}\left(1 - e^{-\alpha^i\left(\Delta t_1^i - \Delta t_3^i\right)}\right)}{\frac{q^i}{\alpha^i}\left(1 - e^{-\alpha^i \Delta t_1^i}\right)} \tag{4}$$

Equation (4) can be solved numerically and the sole unknown variable $\alpha^i$ is found.

The temperature interval $\left[T_i^{min}, T_i^{max}\right]$ is the user's private information and cannot be determined by the SPS solely on the basis of power consumption measurements. On the other hand, in this model it is not necessary to know the absolute temperature of the device, but only when it is powered or not. In order to predict the future instants in time when the TCL must be ON or OFF to maintain the temperature of the TCL's fluid within the nominal range $\left[T_{min}^i, T_{max}^i\right]$, an equivalent dynamic model is created for a fictitious virtual temperature $y^i(t_k)$ that varies within a normalised interval, the profile/behaviour of which, less a scale factor, describes the real temperature behaviour $T^i(t_k)$, so the future instants in time in which the TCL is ON can be predicted.

If $y^i(t_k) = \beta^i(T^i(t_k) - T_\infty^i)$ is a change of coordinate representing said virtual temperature, then:

$$y^i \ : \ \left[T_\infty^i, T_{\max}^i\right] \ \mapsto \ \left[y_\infty^i = 0, y_{\max}^i = 1\right].$$

Replacing the above equation in equation (1), one obtains

$$y^i(t_{k+1}) = y^i(t_k)e^{-\alpha^i dt} + \frac{\beta^i q^i}{\alpha^i}\left(1 - e^{-\alpha^i dt}\right)u^i(t_k) \tag{5}$$

Considering now the discharge time $\Delta t_{2'}^i$, of equation (5) with $y^i=1$ and $u^i=0$ the result is

$$y_{\min}^i = e^{-\alpha^i \Delta t_2^i}$$
.

Considering the charge time $\Delta t_1^i$ from $y_{min}^i = e^{-\alpha^i \Delta t_2}$ to $y_{max}^i = 1$, manipulating equation (5) one obtains

$$\frac{\beta^i q^i}{\alpha^i} = \frac{1 - e^{-\alpha^i \Delta t_2^i}e^{-\alpha^i \Delta t_3^i}}{\left(1 - e^{-\alpha^i \Delta t_3^i}\right)} \tag{6}$$

Following this proposed procedure, all the parameters of the virtual temperature model of the TCL in equation (5) can be identified using power consumption measurements. The virtual temperature model can thus be used to create a forecast based on said model of the future ON/OFF states of the TCL.

This type of measurement of the ON/OFF states following the temperature trend from minimum to maximum is shown in Figure 4.

The problem now is to estimate the virtual temperature $y^i(t_k)$ of the model in equation (5) measuring solely the power consumption of the TCL through the SPS. The state variables of interest for an observer are the state of the smart socket, $s^i(t_k)$ and the ON/OFF state of the TCL $\delta^i(t_k)$ that can be obtained through a power consumption measurement. Clearly, the TCL can be ON only if the SPS is ON; whereas the TCL must be OFF when the SPS is OFF. In other words, the current state of the TCL can be seen as the product of two Boolean variables

$$u^i(t_k) = s^i(t_k) \cdot \delta^i(t_k)$$

as seen in equation (2).

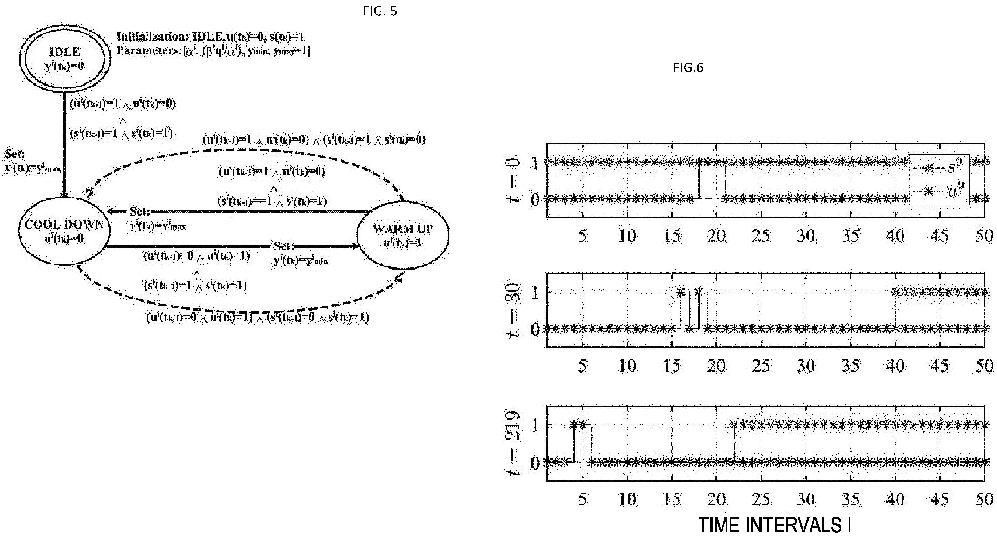

The hybrid System that represents the observer is shown in Figure 5. The observer uses information of the thermostatic control of the TCL described in equation (3). This consists of three discrete states and a continuous state $y^i(t_k)$ which corresponds to the virtual temperature of the TCL according to equation (5).

In the "IDLE" state the observer sees the drop from $u^i(t_{k-1}) = 1$ to $u^i(t_k)$ when the SPS is ON $s^i(t_{k-1}) = s^i(t_k) = 1$. This event is called synchronisation. When this event is detected, it means that the TCL is OFF because $T^i(t_k) = T_{max}$. Therefore the observer sets the virtual temperature $y^i(t_k)$ to $y^i_{max}=1$ and starts the observation process moving to the "COOL DOWN" state, which represents the temperature discharge process given by the equation (5) with $u^i = 0$. The "WARM UP" state models the charging process of $y^i(t_k)$. If a synchronisation event is detected, the temperature is set equal to $T^i(t_k) = T_{max}$ and the state is brought to "COOL DOWN". In the "COOL DOWN" and "WARM UP" states, the virtual temperature evolves in an open loop as in equation (5) until another synchronisation event is detected. A typical example of the behaviour of the observed temperature is shown in Figure 5.

According to the above therefore, with step 30 consumption is estimated in a time window for each TCL appliance associated with an SPS.

On the basis of this local estimate, according to the method of the invention, a global estimate is made of the consumption of the TLCs connected to the P2P network through SPS. This is done through step 40 of the method of the invention in which a local interaction protocol is developed between SPSs connected in a P2P network to allow optimised planning of their on/off states $s^i(t_k)$ in a sliding time window $\tau(t_k)$ to reduce the forecast absorbed power peaks of the TCL network, subject to temperature constraints given by the equations (1)-(3) that impose a given average power consumption for long time intervals.

In accordance with equations (1) - (3), the instantaneous power consumption of a population of $V$ TCLs with the associated SPSs at time $t_k$ is given by

$$P(t_k) = \sum_{i \in \mathcal{V}} p^i(t_k) = \sum_{i \in \mathcal{V}} \mathrm{p}^i \cdot u^i(t_k) \qquad (7).$$

The power consumed by the network 100 in a future time $t = t_k + ldt$ is estimated as

$$P_\ell(t_k) = \sum_{i \in \mathcal{V}} p^i u^i_\ell(t_k) = \sum_{i \in \mathcal{V}} \mathrm{p}^i \cdot s^i_\ell(t_k)\delta^i_\ell(t_k) \qquad (8)$$

In addition, $\tau(t_k) = [t_k, t_k + Ldt)$ specifies a time interval with length Ldt equal to a sliding time window.

At each instant $t_k$, agent i actuates the state of its SPS according to the value of $s^i_1(t_{k-1})$ and computes a new planning $s^i_1(t_k), s^i_l(t_k), \dots, s^i_L(t_k)$. To simplify notation, the following vector notation is used for planning variables:

$$\mathbf{s}^i = \left[ s^i_1; \dots, s^i_\ell; \dots; s^i_L \right]$$

and the dependence of the vector on time is omitted. Vector $s^i \in \{0,1\}^L$ represents the planned ON/OFF state of the i-th SPS in the time window $\tau(t_k)$. At each instant $t_k$, each TCL tries to optimise its sequence of operations $s^i$ interacting with the other agents and optimising the subsequent objective function, representing future power consumption peaks of the network in the time window $\tau(t_k)$, as a consequence of their emerging behaviour

$$\mathbf{s}^i(t_{k+1}) = \underset{\mathbf{s}^i \in \chi^i(t_k); \; i \in \mathcal{V}}{\text{argmin}} \; \underset{\ell=1,\ldots,L}{\max} \; P_\ell(t_k)$$

(9)

where $P_l$ is defined in the equation (8) and $\chi^i(t_k)$ is a time-dependent set of conditions to be met of the i-th TCL that depend on its characteristic parameters, the current estimated state of the TCL and the auxiliary variables $u^i, \delta^i$ necessary to model its temperature dynamic in the desired time window.

At each instant $t_k$, each SPS calculates an approximate solution to the problem of equation (9) called $s^{i,*}(t_k)$, then each SPS updates its state according to $s^i(t_{k+1}) = s^{i,*}(t_k)$.

Note that $\chi^i(t_k)$ is a set of linear constraints with mixed real and Boolean variables, hence the problem of equation (10) is NP-hard in general.

A model of a mixed logic dynamic (MLD) system is thus used, described in A. Bemporad and M. Morari, "Control of systems integrating logic, dynamics, and constraints," Automatica, vol. 35, no. 3, pages 407-427, 1999, to define a set of Boolean variables and linear constraints, in particular the set $\chi^i(t_k)$ in equation (9), which models the behaviour of the TCL with the SPS hybrid system. The MLD modelling instrument makes it possible to translate state transitions into a hybrid system expressed as Boolean functions in constraints of linear wholes with Boolean variables. All the manipulations necessary to calculate an MLD model are not included herein, and only the end result is shown.

The set of inequalities necessary to represent the local dynamic constraints of the TCL-with-SPS hybrid system, according to A. Bemporad and M. Morari, based on the hysteretic control law (3) and the state of the SPS, represented by the Boolean variables $u^i(t_k)$, $s^i(t_k)$, $\delta^i(t_k)$ and the continuous state variable $y^i(t_k)$ of each TCL is:

$$-s^i(t_k) + u^i(t_k) \leq 0$$
$$-\delta^i(t_k) + u^i(t_k) \leq 0$$
$$s^i(t_k) + \delta^i(t_k) - u^i(t_k) \leq 1$$

(10)

$$-g^i(t_k) + \epsilon + \delta_1^i(t_k)(g_{\min}^i - \epsilon) \leq 0$$
$$-f^i(t_k) + f_{\min}^i(1 - \delta^i(t-1)) + h_{\min}^i \delta_2^i(t_k) \leq 0$$
$$\delta_1^i(t_k) + \delta_2^i(t_k) - 2\delta(t_k)^i = 0$$

(11)

Where $g_{min}^i, f_{min}^i$, and $h_{min}^i$ are, respectively, the abbreviations for the minimum of the functions

$$g^i(t_k) = (y^i(t_k) - y_{\min}),$$

$$f^i(t_k) = (y^i(t_k) - 1),$$

and

$$h^i(t_k) = f^i(t_k) - f^i_{\min}(1 - \delta^i(t_{k-1}))$$

In addition, $\epsilon \in \Re^+$ is an arbitrarily small constant, while $\delta^i_1, \delta^i_2$ are "dummy" variables to express inequalities as linear constraints.

Moreover, the set of local dynamic constraints $\chi^i(t_k)$ in equation (9) also includes the constraints due to the linear dynamic of the normalised temperature in equation (5) and the limits of its range of variation $y^i \in \left[y^i_{min}, 1\right]$. These constraints are provided as inequality constraints on the control input, i.e. $\mathbf{A^i u^i} \leq \mathbf{b^i}$. From equation (5), to simplify notation, one sets $\hat{A}^i = e^{-\alpha^i dt}$ and $\hat{B}^i = (1 - e^{-\alpha^i dt})\frac{\beta^i q^i}{\alpha^i}$. Then, using $\mathbf{u^i}$, $\mathbf{y^i}$ and $\delta^i$ as vectors of L items with the corresponding elements $u^i_l, y^i_l$ and $\delta^i_l$ with l=1,....,L, it is possible to predict the trajectory of $\chi^i(t_k)$ in the time window $\tau(t_k) = [t_k, t_k + Ldt)$ as follows

$$\mathbf{y}^i = \underbrace{\begin{bmatrix} \hat{B}^i & 0 & \cdots & 0 \\ \hat{A}^i\hat{B}^i & \hat{B}^i & \cdots & 0 \\ \vdots & & & \ddots \\ \hat{A}^{iL-1}\hat{B}^i & \hat{A}^{iL-1}\hat{B}^i & \cdots & \hat{B}^i \end{bmatrix}}_{\boldsymbol{F}^i}\mathbf{u}^i + \underbrace{\begin{bmatrix} \hat{A}^i \\ \hat{A}^{i2} \\ \vdots \\ \hat{A}^{iL} \end{bmatrix}}_{\boldsymbol{G}^i} y^i(t_k) \qquad (12)$$

Local temperature constraints can be represented in a compact manner as $\mathbf{A^i u^i} \leq \mathbf{b^i}$, where

$$\mathbf{A}_i = \begin{bmatrix} \boldsymbol{F}^i \\ -\boldsymbol{F}^i \end{bmatrix}, \quad \mathbf{b}_i = \begin{bmatrix} y^i_{\max}\mathbf{1} - \boldsymbol{G}^i y^i(t_k) \\ -y^i_{\min}\mathbf{1} + \boldsymbol{G}^i y^i(t_k) \end{bmatrix} \qquad (13)$$

Lastly, the set of linear constraints $\chi^i(t_k)$ is composed appropriately to include all the logic and dynamic constraints mentioned above in equations (10), (11), (12), (13).

In step 50 of the method of the invention a solution to the problem of equation (9) is sought by approximation with the multi-agent control architecture proposed above.

Algorithm 1, called "TCL Cooperation Protocol", consists of an updating rule of the local state executed by each agent indefinitely. Every agent possesses a local forecast of the future average energy consumption of the network with respect to the window $\tau(t_k)$. To update this forecast, each agent periodically collects the forecast made by neighbouring agents and then updates its own, exploiting the multistage dynamic of the consensus algorithm proposed in M. Franceschelli and A. Gasparri, "Multi-stage discrete time dynamic average consensus," IEEE Conf. on Decision and Control, pages 897- 903, 2016. At each iteration, each agent attempts to minimise, with a probability $\mu$, the maximum forecast energy consumption of the network in the window $\tau(t_k)$, updating its own programming of the ON/OFF states according to local constraints (10) - (13), thus solving the problem of equation (9). It's important to note that the local constraints of each agent $\chi^i(t_k)$ are variable in time since they depend on the current state of the TCL at the time when the optimisation takes place.

It should be noted that, although the problem of optimisation in equation (14) (see algorithm 1 below) is in general NP-hard, inasmuch as it involves mixed linear and Boolean variables, in the setting for each agent i, the number of variables to be optimised is relatively small and the involved constraints are only local in a short time horizon $\tau(t_k)$.

For example, approximately 20/60 steps in the future could be justified from 30 minutes to two-three hours of operation, depending on the tuning of the algorithm. Hence, the complexity of the proposed method does not increase with the size of the network, but only with respect to the dimensions of the time horizon (window).

Moreover, it should be noted that it is not necessary for the solution to be optimal, because the approach is iterative and ultimately heuristic. It is a fact that what is needed is a feasible solution that improves the value target function with respect to the current SPS programming.

---

**Algorithm 1** TCL Cooperation Protocol

---

**Estimation variables of Agent** $i$:

$P_{\ell,w}^i(k)$, for $w = 1, \ldots, m$, $\ell = 1, \ldots, L$;

$\mathbf{s}^i = [s_1^i, \ldots, s_\ell^i, \ldots, s_L^i]$;

**ON/OFF Scheduling of Agent** $i$:

$u_\ell^i(t_k)$, $s_\ell^i(t_k)$, $\ell = 1, \ldots, L$;

**Tuning parameters:**

$\rho, \epsilon \in \mathbb{R}^+$, $\epsilon < \frac{1}{2D_{\max}}$, $\rho < 1 - \epsilon D_{\max}$, $\mu, \xi > 0$;

$D_{\max}$: maximum degree of $\mathcal{G}$;

**Initial counters:** $h = 0$, $k = 0$;

**Protocol execution:**

All agents repeat indefinitely the next operations, here reported for agent $i$:

- Increment the iteration counter $h = h + 1$;
- Gather $P_{\ell,w}^j(h)$ for $\ell = 1, \ldots, L$, $w = 1, \ldots, m$, from current neighbors $j \in \mathcal{N}_i$;
- Update state variables $P_{\ell,w}^i(h)$ for $\ell = 1, \ldots, L$, $w = 1, \ldots, m$ as follows

$$P_{\ell,1}^i(h+1) = P_{\ell,1}^i(h) - \sum_{j \in \mathcal{N}_i} \varepsilon \left( P_{\ell,1}^i(h) - P_{\ell,1}^j(h) \right) + \rho \left( p_i u_\ell^i(t_k) - P_{\ell,1}^i(h) \right)$$

$$P_{\ell,2}^i(h+1) = P_{\ell,2}^i(h) - \sum_{j \in \mathcal{N}_i} \varepsilon \left( P_{\ell,2}^i(h) - P_{\ell,2}^j(h) \right) + \rho \left( P_{\ell,1}^i(h) - P_{\ell,2}^i(h) \right)$$

$$\vdots$$

$$P_{\ell,m}^i(h+1) = P_{\ell,m}^i(h) - \sum_{j \in \mathcal{N}_i} \varepsilon \left( P_{\ell,m}^i(h) - P_{\ell,m}^j(h) \right) + \rho \left( P_{\ell,m-1}^i(h) - P_{\ell,m}^i(h) \right)$$

- With probability $\mu$, solve the next optimization problem

$$[\mathbf{s}^{i,\star}, \mathbf{u}^{i,\star}] = \operatorname*{argmin}_{\mathbf{s}^i \in \chi(t_k)} \max_{\ell \in \{1, \ldots, L\}} \quad p_i u_\ell^i + P_{\ell,m}^i(h) \quad (14)$$

**If** $[\mathbf{s}^{i,\star}, \mathbf{u}^{i,\star}]$ is a feasible solution and

$$\max_{\ell \in \{1, \ldots, L\}} \mathbf{p}^i u_\ell^{i,\star} + P_{\ell,m}^i(h) < \max_{\ell \in \{1, \ldots, L\}} \mathbf{p}^i u_\ell^i + P_{\ell,m}^i(h) - \xi$$

**then** set $\mathbf{s}^i(t_k) := \mathbf{s}^{i,\star}$, $\mathbf{u}^i(t_k) := \mathbf{u}^{i,\star}$

**else** $\mathbf{s}^i(t_k) := \mathbf{s}^i(t_k)$, $\mathbf{u}^i(t_k) := \mathbf{u}^i(t_k)$, i.e., do nothing.

**Endif**

- Measure time $t$;
- **If** $t > t_k + dt$ **then** shift the receding horizon time window:

Set the current SPS state equal to:

$s^i(t_{k+1}) := s_1^i(t_k)$ ;

Shift power consumption prediction by $dt$:

$$\mathbf{u}^i(t_{k+1}) := \left[ u_2^i(t_k), \ldots, u_\ell^i(t_k), \ldots, u_{L-1}^i(t_k), u_{L-1}^i(t_k) \right]$$

Shift SPS scheduling by $dt$:

$$\mathbf{s}^i(t_{k+1}) := \left[ s_2^i(t_k), \ldots, s_\ell^i(t_k), \ldots, s_{L-1}^i(t_k), s_{L-1}^i(t_k) \right]$$

Let $k := k + 1$

**Endif**

---

Results of the simulations

In this section, numerical simulations are provided to corroborate the effectiveness of the proposed approach.

For the simulations, a connected P2P network $\mathcal{G} = \{\mathcal{V}, \varepsilon\}$ of n = 500 agents is considered for which the topology is generated as a non-oriented random Erdös-Rényi graph, with probability of existence at the edge equal to 3 log (n) / n. The dynamic of the agents described in detail in (1) - (3) was initialised with parameters that have been selected randomly from a set of 6 actual electric water heaters that were used in the experiments. In particular, the choice was $p^i \in [1.2, 1.6]$ kW, $\alpha^i = 1.38 \times 10^{-4}$ (1% 5%) s$^{-1}$, $T_\infty^i = 25$ °C, q$^i$ = 0.098 °C / kW. The initial temperature was selected randomly within a desired temperature interval [T$^i_{min}$, = 45; T$^i_{max}$ = 50] °C. The parameters of the data observer in equations (4) - (5) were obtained using the procedure described above. The proposed multi-agent control architecture operates in real time with sampling frequency dt = 3 min. The time window was selected with a length of 100 minutes, so it includes L = 50 time intervals. At t = 0, Algorithm 1 was initialised with a feasible plan for the local constraints of each agent, while the initial SPS plan is to remain powered always, i.e. $s_l^i = 1$, l = 1, ...,50 (see the top curve of Figure 6 for t = 0). The probability of each agent i to locally optimise equation (14) at each iteration k of Algorithm 1 was set to $\mu$ = 0.004.

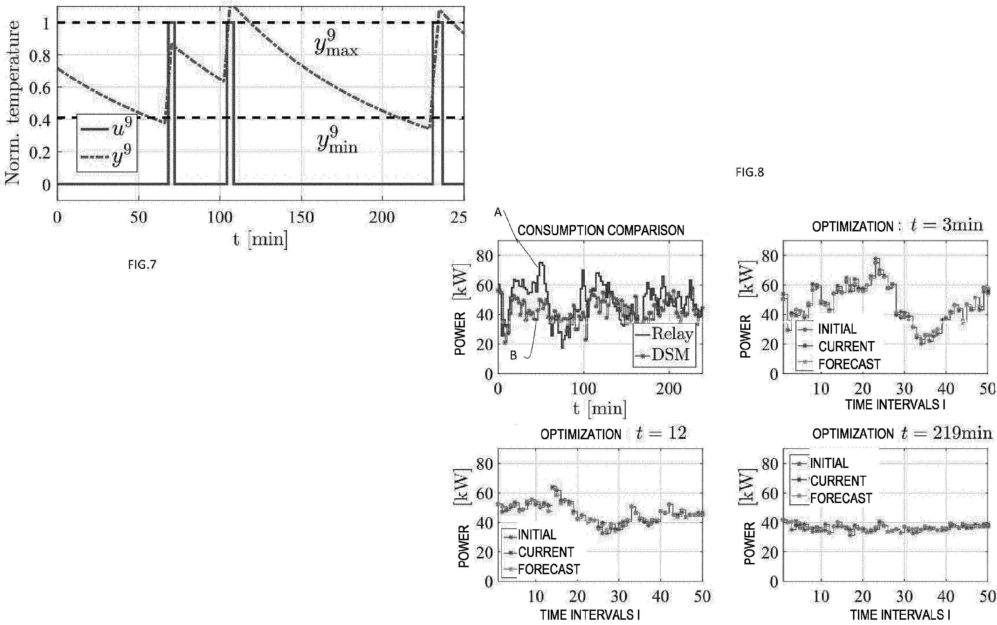

Figure 6 shows an example of actual planning of agent 9 at different instants in time during the execution of the algorithm. Moreover, Figure 7 shows the time profile of normalised virtual temperature (9) of agent 9 estimated by the proposed hybrid observer, shown in Figure 5.

A comparison between the power absorbed by the considered network of 500 TCL coordinated by the proposed algorithm 1, with respect to an equivalent set of autonomous TCL with traditional relay control is shown at the top left of Figure 8. In particular, a reduction in consumption throughout the test of 250 min. can be observed.

Figure 6 shows the results of the optimisation activities at different time intervals, at t = 3, 12, 219 minutes, respectively.

Note that, at each step, the proposed method is effective: the initial power peak forecast in the window of the horizon, shown in red, is eliminated. The real energy consumption of the network on the time horizon and the forecast consumption, calculated using the dynamic average consensus algorithm, are shown in blue and green respectively.

The numerical optimisation in this simulation was solved using the Matlab Mixed Integer Linear Programming (intlinprog) solver with a time limit, i.e. with "Branch and Bound" algorithm that provides the best solution within 5 seconds.

Experimental results

The preliminary results provided in this document consider a small scale test bench with 6 household electric water heaters. Future work with existing hardware will scale experimentation up to 100 heterogeneous TCLs such as electric water heaters and radiators.

Each water heater was plugged into a WeMor Insight Smart Power Socket. The SPS has a remote on / off switch so it can be turned on and off, and it measures energy consumption with a sampling frequency of at least 1 Hz. It also has WiFi communication capability. This standard SPS was chosen as it offers sufficient hardware capabilities and an open API. The test bench has two Java applications, a client and a server, one installed in a "Pi Zero W" Raspberry connected to the same WiFi as the smart socket and a server application that can manage and update a database with all information about the state of all the connected smart sockets in real time. The software was integrated with MatLab for the rapid prototyping and testing of the algorithms.

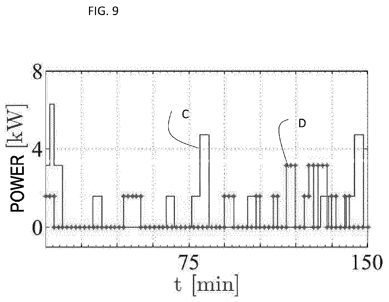

Figure 9 shows the preliminary experimental tests.

The measured energy consumption (C) of a set of 6 TCLs for 150 minutes is compared to the same set of TCLs that collaborate with the proposed algorithm (D). Note how the peak energy consumption in the test is significantly reduced when the proposed algorithm is used with respect to the case when the TCL is not connected to the others, while average energy consumption is approximately the same.

**Claims**

1. Method for reducing the peaks in electrical consumption of a plurality of electrical appliances (2), the method comprising:

   a) providing a plurality of electrical appliances (2) comprising:

      • a first set of n Thermostatically Controlled Load (TCL) type electrical appliances, with n > 2;

• a second set of m non-TCL electrical appliances, with m ≥0;

b) associating smart socket (1) not part of the electrical appliance, with each electrical appliance, said smart socket having autonomous processing, communication and decision capabilities and including:

• a controller (4);
• a unit for connection (6) to a network (100);
• a device that measures the power (7) absorbed by electrical appliance (2) associated therewith;
• switch (3) to turn the power supplied to the associated electrical appliance on or off;

c) connecting the smart sockets associated with the plurality of electrical appliances through a "peer to peer" network (100) allowing point-to-point connections between smart sockets;
d1) locally estimating, for each smart socket, a future electricity consumption, for the electrical appliance associated with the smart socket, in a sliding time window, said estimate being calculated solely on the basis of the previous electrical consumption of the electrical appliance and a mathematical model of said consumption;
d2) sending said estimate in the "peer to peer" network for each smart socket;
e) estimating a future average consumption in said sliding time window of the plurality of electrical appliances whose associated smart sockets are connected to the "peer to peer" network on the basis of said local estimates by computing a consumption of the plurality of electrical appliances at any instance in the sliding window divided by the number of plurality of electrical appliances; said future average consumption is calculated with cooperation between the smart socket controllers thus highlighting average consumption peaks in said sliding time window;
f) for each smart socket associated with a thermostatically controlled load TCL electrical appliance, and on the basis of said estimated future average consumption, each smart socket plans the future sequence of periods to turn the switch of the smart socket of the associated thermostatically controlled load TCL electrical appliance on and off in the sliding time window so as to minimize said average consumption peaks; in order to reduce variations in the total electrical power profile absorbed by the plurality of electrical appliances.

2. Method according to claim 1, wherein to locally estimate future electricity consumption for electrical appliance (2) associated with smart socket (1), in a sliding time window, said estimate being done only on the basis of the values of the appliance's previous electrical consumption, comprises the step of

- monitoring the electrical consumption of the appliance for a determined time interval.

3. Method according to one or more of the preceding claims, wherein estimating the future average consumption for all the electrical appliances connected to the network includes:

- determining the presence of a consumption peak.

4. Method according to claim 3, wherein minimize said average consumption peaks includes

- minimising the average consumption peaks expected in determined future time instants with respect to a current time, by means of changes to said sequence.

5. Method according to one or more of the preceding claims, wherein to locally estimate an electricity consumption in a sliding time window for each smart socket, which includes:

- measuring the effective electricity consumption of said electrical appliance in a past time interval;
- estimating the electricity consumption profile in a forecast window, on the basis of said measurements taken in said past time interval.

6. Method according to one or more of the preceding claims, wherein:

- each smart socket manages a dynamic parameters' identification step for the relevant thermostatically controlled electrical appliance.

7. Method according to one or more of the preceding claims, wherein the step of estimating the average future consumption is performed in accordance with an iterative process modifying the sequence to turn the switch of the smart socket on and off to power the electrical appliance, recalculating and updating the estimated average future consumption until a stable state is obtained in which there are fewer variations in the average future consumption than before the iterative process.

8. Method according to one or more of the preceding claims, wherein the step of forecasting a future average consumption in said sliding time window for the plurality of electrical appliances is done by the controller of all the smart sockets connected in a given instant to the peer-to-peer network.

9. Method according to one or more of the preceding claims, wherein each smart socket sends said estimate to a sub-set of neighbouring smart sockets it has the relative IP address of.

10. System architecture (200) including:

- a plurality of electrical appliances (2) comprising:

• a first set of n electrical appliances of the Thermostatically Controlled Load (TCL) type, with n > 2;
• a second set of m non-TCL electrical appliances, with m $\geq$0;

- a plurality of smart sockets (1) that are not part of the electrical appliances, each smart socket being associated with an electrical appliance, said smart socket having autonomous processing, communication and decision capabilities and including:

• a controller (4);
• a unit for connection (6) to a network;
• a device that measures the power (7) absorbed by the electrical appliance associated therewith;
• switch (3) to turn the power supplied to the associated electrical appliance on or off;

- said smart sockets being connected in a "Peer-to-Peer" network (100) allowing point-to-point connections between smart sockets;
- wherein said controller (4) of each smart socket is programmed:

a) to estimate a future electricity consumption profile, expected in a forecast time window divided into multiple time intervals for the electrical appliance associated with the smart socket; said estimate being calculated solely on the basis of the previous electrical consumption of the electrical appliance and a mathematical model of said consumption;
b) to send said estimate using said P2P network;
c) to forecast an average consumption profile in said future sliding time window for all the electrical appliances connected to the "peer to peer" network in a cooperative way, with the controllers of the smart sockets connected to the P2P network exchanging local data; the average consumption profile is obtained by computing a consumption of the plurality of electrical appliances at any instance in the future sliding time window divided by the number of plurality of electrical appliances thus highlighting consumption peaks in said sliding window;
d) for each smart socket associated with an electrical appliance with thermostatically controlled load TCL only, on the basis of the information on the average consumption profile estimated by the network, to calculate the planning of the periods in which the relevant switches of the smart sockets are turned on and the periods in which they are turned off, to supply electricity to the associated TCL electrical appliances, in order to minimise said consumption peaks at critical times, in a forecast time window.

11. Architecture according to claim 10, wherein said architecture requires neither a central coordinator nor a central database, i.e. a location where the estimate information provided by the smart sockets installed and communicating in said network is collected.

12. Architecture according to claim 10 or 11, wherein said electrical appliance is a household electrical appliance.

13. Architecture according to claim 12, wherein said household electrical appliance is a water heater.

14. Architecture according to one or more of the claims from 10 to 13, wherein said architecture is a distributed architecture.

15. Architecture according to claim 9, wherein said unit for connection (6) is a module that can exchange autonomous and asynchronous messages with at least one other connection unit (6) of at least one other controller (4) of at least one other corresponding smart socket (1).

**Patentansprüche**

1. Verfahren zur Reduzierung des Spitzenstromverbrauchs mehrerer elektrischer Geräte (2), wobei das Verfahren Folgendes umfasst:

   (a) Versorgung mehrerer elektrischer Geräte (2), bestehend aus:

   • einer ersten Gruppe von n elektrischen Geräten des Typs mit thermostatisch gesteuertem Last (TCL), wobei n > 2;
   • einer zweiten Gruppe von m elektrischen Geräten des nicht-TCL Typs, wobei m ≥ 0;

   (b) Zuordnung einer intelligenten Steckdose (1), die nicht in das elektrische Gerät integriert ist, zu jedem elektrischen Gerät, wobei diese intelligente Steckdose über autonome Verarbeitungs-, Kommunikations- und Entscheidungsfähigkeiten verfügt, und umfassend :

   • einen Controller (4);
   • eine Einheit (6) zur Verbindung mit einem Netzwerk (100);
   • eine Vorrichtung zum Messen der Leistung (7), die vom zugehörigen elektrischen Gerät (2) absorbiert wird ;
   • einen Schalter (3) zum Ein- und Ausschalten der Stromversorgung des zugehörigen elektrischen Geräts;

   c) Verbindung von intelligenten Steckdosen mit mehreren elektrischer Geräte über ein Peer-to-Peer-Netzwerk (100), wodurch Punkt-zu-Punkt-Verbindungen zwischen den intelligenten Steckdosen ermöglicht werden;
   d1) Lokale Schätzung des zukünftigen Stromverbrauchs des zugehörigen elektrischen Geräts für jede intelligente Steckdose innerhalb eines gleitenden Zeitfensters, wobei diese Schätzung ausschließlich auf dem bisherigen Stromverbrauch des elektrischen Geräts kalkuliert wird und eines mathematischen Modells dieses Verbrauchs;
   d2) Versendung dieser Schätzung über das Peer-to-Peer-Netzwerk für jede intelligente Steckdose;
   e) Schätzung des durchschnittlichen zukünftigen Stromverbrauchs der mehreren elektrischen Geräte, mit denen die zugehörigen intelligenten Steckdosen über das Peer-to-Peer-Netzwerk innerhalb des gleitenden Zeitfensters verbunden sind, auf der Grundlage der genannten lokalen Schätzungen und durch Berechnung eines Verbrauchs der mehreren elektrischen Geräte zu jedem Zeitpunkt des gleitenden Zeitfensters, dividiert durch die Anzahl der mehreren elektrischen Geräte; wobei die Berechnung des durchschnittlichen zukünftigen Verbrauchs kollaborativ zwischen den Controllern der intelligenten Steckdosen erfolgt, wodurch durchschnittliche Verbrauchsspitzen innerhalb des gleitenden Zeitfensters hervorgehoben werden;
   (f) Für jede mit einem thermostatisch geregelten Elektrogerät von TCL verbundene intelligente Steckdose plant jede intelligente Steckdose auf Basis der Schätzung des zukünftigen Durchschnittsverbrauchs die zukünftige Abfolge der Aktivierungs- und Deaktivierungsphasen des Schalters der intelligenten Steckdose des zugehörigen thermostatisch geregelten Elektrogeräts innerhalb eines gleitenden Zeitfensters, um durchschnittliche Verbrauchsspitzen zu minimieren und dadurch Schwankungen im Gesamtstromprofil der von den verschiedenen Elektrogeräten absorbierten Leistung zu reduzieren.

2. Verfahren nach Anspruch 1, wobei für eine lokale Schätzung des zukünftigen Stromverbrauchs eines mit einer intelligenten Steckdose (1) verbundenen Elektrogeräts (2) innerhalb eines gleitenden Zeitfensters, erfolgt diese Schätzung ausschließlich auf Basis der bisherigen Stromverbrauchswerte des Geräts, und folgenden Schritt umfasst:

   - Überwachung des Stromverbrauchs des Geräts während eines festgelegten Zeitintervalls.

3. Verfahren nach einem oder mehreren der vorhergehenden Ansprüche, wobei die Schätzung des zukünftigen Durchschnittsverbrauchs aller an das Netzwerk angeschlossenen Elektrogeräte Folgendes umfasst:

   - Feststellung des Vorhandenseins einer Verbrauchsspitze.

4. Verfahren nach Anspruch 3, wobei die Minimierung der durchschnittlichen Verbrauchsspitzen Folgendes umfasst:

- Minimierung der zu zukünftigen Zeitpunkten erwarteten durchschnittlichen Verbrauchsspitzen relativ zum gegenwärtigen Zeitpunkt durch Modifizierung der Abfolge.

5. Verfahren nach einem oder mehreren der vorhergehenden Ansprüche zur lokalen Schätzung eines Stromverbrauchs innerhalb eines gleitenden Zeitfensters für jede intelligente Steckdose, umfassend:

- Messen des tatsächlichen Stromverbrauchs des Elektrogeräts über einen vergangenen Zeitintervall;
- Schätzen des Stromverbrauchsprofils innerhalb eines PrognoseZeitraum auf Grundlage der Messungen im vergangenen Zeitraum.

6. Verfahren nach einem oder mehreren der vorhergehenden Ansprüche, wobei:

- jede intelligente Steckdose einen dynamischen Parameteridentifizierungsschritt für das entsprechende thermostatisch gesteuerte Elektrogerät durchführt.

7. Verfahren nach einem oder mehreren der vorhergehenden Ansprüche, wobei der Schritt der Schätzung des durchschnittlichen zukünftigen Verbrauchs durch einen iterativen Prozess durchgeführt wird, bei dem die Aktivierungs- und Deaktivierungssequenz der intelligenten Steckdose zum Einschalten des elektrischen Geräts geändert wird, wobei die Schätzung des durchschnittlichen zukünftigen Verbrauchs neu berechnet und aktualisiert wird, bis ein stabiler Zustand erreicht ist, in dem die Schwankungen des zukünftigen Durchschnittsverbrauchs geringer sind als vor dem iterativen Prozess.

8. Verfahren nach einem oder mehreren der vorhergehenden Ansprüche, wobei der Schritt der Prognose eines zukünftigen durchschnittlichen Verbrauchs mehrerer elektrischer Geräte innerhalb des gleitenden Zeitfensters vom Controller aller zu einem bestimmten Zeitpunkt mit dem Peer-to-Peer-Netzwerk verbundenen intelligenten Steckdosen durchgeführt wird.

9. Verfahren nach einem oder mehreren der vorhergehenden Ansprüche, wobei jede intelligente Steckdose die Schätzung an eine Teilmenge benachbarter intelligenter Steckdosen mit der zugehörigen relativen IP-Adresse sendet.

10. Systemarchitektur (200), umfassend:

- eine Vielzahl elektrischer Geräte (2), bestehend aus:

• einer ersten Gruppe von n elektrischen Geräten des Typs von einer thermostatisch gesteuerten Last (TCL), wobei n > 2;
• einer zweiten Gruppe von m elektrischen Geräten, die keine TCL sind, wobei m $\geq$ 0;

- einer Vielzahl von intelligenten Steckdosen (1), die unabhängig von den elektrischen Geräten sind, wobei jede intelligente Steckdose einem elektrischen Gerät zugeordnet ist und über autonome Verarbeitungs-, Kommunikations- und Entscheidungsfähigkeiten verfügt, sowie:

• einem Controller (4);
• eine Verbindungseinheit (6) zu einem Netzwerk;
• eine Vorrichtung zur Messung der vom angeschlossenen Elektrogerät absorbierten Leistung (7);
• ein Schalter (3) zum Ein- und Ausschalten der dem angeschlossenen Elektrogerät versorgten Leistung;

- wobei die intelligenten Steckdosen mit einem Peer-to-Peer-Netzwerk (100) verbunden sind und somit Punkt-zu-Punkt-Verbindungen zwischen den intelligenten Steckdosen ermöglichen;
- wobei der Controller (4) jeder intelligenten Steckdose derart programmiert ist:

(a) dass ein zukünftiges Stromverbrauchsprofil für das mit der intelligenten Steckdose verbundene Elektrogerät geschätzt wird, das über einen in mehrere Zeitintervalle unterteilten Prognosezeitraum berechnet wird; wobei diese Schätzung ausschließlich auf Basis des bisherigen Stromverbrauchs des Elektrogeräts und einem mathematischen Modell dieses Verbrauchs kalkuliert wird;

(b) dass diese Schätzung über das P2P-Netzwerk zu senden ist ;

c) dass gemeinsam mit den Controllern der mit dem P2P-Netzwerk verbundenen intelligenten Steckdosen ein durchschnittliches Stromverbrauchsprofil für alle mit dem Peer-to-Peer-Netzwerk verbundenen Elektrogeräte kooperativ über das genannte zukünftige gleitende Zeitfenster geschätzt wird, indem lokale Daten ausgetauscht werden, wobei das durchschnittliche Verbrauchsprofil derart ermittelt wird, dass ein Verbrauch von mehreren elektrischen Geräten zu jedem Zeitpunkt im zukünftigen gleitenden Zeitfenster berechnet und durch die Anzahl der mehreren elektrischen Geräte dividiert wird, derart dass dadurch Verbrauchsspitzen innerhalb dieses gleitenden Fensters hervorgehoben werden.

d) dass nur für jede mit einem thermostatisch gesteuerten elektrischen Gerät (TCL) verbundene intelligente Steckdose basierend auf den vom Netzwerk geschätzten Informationen zum durchschnittlichen Verbrauchsprofil der Zeitplan für die Aktivierungs- und Deaktivierungsphasen der zugehörigen Schalter der intelligenten Steckdosen berechnet wird, um die zugehörigen elektrischen TCL-Geräte mit Strom zu versorgen und Verbrauchsspitzen zu kritischen Zeiten in einem PrognoseZeitraum zu minimieren.

11. Architektur nach Anspruch 10, wobei diese Architektur keinen zentralen Koordinator oder eine zentrale Datenbank benötigt, d. h. keinen Ort, an dem die von den installierten, mit dem Netzwerk kommunizierenden intelligenten Steckdosen bereitgestellten Schätzinformationen gesammelt würden.

12. Architektur nach Anspruch 10 oder 11, wobei es sich bei dem elektrischen Gerät um ein elektrisches Haushaltsgerät handelt.

13. Architektur nach Anspruch 12, wobei es sich bei dem elektrischen Haushaltsgerät um einen Warmwasserbereiter handelt.

14. Architektur nach einem oder mehreren der Ansprüche 10 bis 13, wobei es sich bei dieser Architektur um eine verteilte Architektur handelt.

15. Architektur nach Anspruch 9, wobei die Verbindungseinheit (6) ein Modul ist, das autonom und asynchron Nachrichten mit mindestens einer anderen Verbindungseinheit (6) mindestens eines anderen Controllers (4) mindestens einer anderen zugehörigen intelligenten Steckdose (1) austauschen kann.


**Revendications**

1. Procédé de réduction des pics de consommation électrique de plusieurs appareils électriques (2), le procédé comprenant :

   a) fourniture de plusieurs appareils électriques (2) comprenant :

   • un premier ensemble de n appareils électriques du type à commande thermostatique contrôlée (TCL), avec n > 2 ;
   • un deuxième ensemble de m appareils électriques non-TCL, avec m $\geq$ 0 ;

   b) association d'une prise intelligente (1), non intégrée à l'appareil électrique, à chaque appareil électrique, ladite prise intelligente comprenant des capacités d'élaboration autonome, communication et décision, et comprenant :

   • un contrôleur (4) ;
   • une unité de connexion (6) à un réseau (100) ;
   • un dispositif qui mesure la puissance (7) absorbée par l'appareil électrique (2) auquel il est associé ;
   • un interrupteur (3) permettant d'activer ou **désactiver l'alimentation** de puissance à l'appareil électrique associé ;

   c) connexion des prises intelligentes associées à plusieurs appareils électriques par un réseau pair à pair (100), permettant des connexions point à point entre prises intelligentes ;
   d1) estimation locale, pour chaque prise intelligente, d'une consommation d'électricité future de l'appareil électrique associé à la prise intelligente dans une fenêtre temporaire coulissante, ladite estimation étant calculée uniquement à partir de la consommation électrique précédente de l'appareil électrique et avec un modèle mathématique de ladite consommation ;

d2) transmission de ladite estimation dans le réseau pair à pair pour chacune prise intelligente ;

e) estimation d'une consommation moyenne future, dans ladite fenêtre temporaire coulissante, des plusieurs appareils électriques, les prises intelligentes associées desquels sont connectées au réseau pair à pair, à partir desdites estimations locales, en calculant une consommation des plusieurs appareils électriques à tout moment dans la fenêtre coulissante, divisée par le nombre d'appareils électriques ; ladite consommation moyenne future étant calculée en collaboration entre les contrôleurs des prises intelligentes, ainsi mettant en évidence des pics de consommation moyens de ladite fenêtre temporaire coulissante;

f) pour chaque prise intelligente associée à un appareil électrique à charge thermostatique contrôlée TCL, et à partir de ladite estimation de la consommation moyenne future, chaque prise intelligente planifie la séquence future des périodes d'activation et de désactivation de l'interrupteur de la prise intelligente de l'appareil électrique associé à charge thermostatique contrôlée TCL, dans la fenêtre temporaire coulissante, afin de minimiser lesdits pics de consommation moyens, à fin de réduire des variations dans le profil électrique totale de la puissance absorbée par les plusieurs appareils électriques.

2. Procédé selon la revendication 1, dans lequel pour estimer localement une consommation électrique future pour un appareil électrique (2) associé à une prise intelligente (1), dans une fenêtre temporelle coulissante, ladite estimation est réalisée uniquement à partir des valeurs de la consommation électrique précédente de l'appareil, et comprend l'étape suivante :

- contrôle de la consommation électrique de l'appareil pendant un intervalle de temps déterminé.

3. Procédé selon une ou plusieurs des revendications précédentes, dans lequel une estimation de la consommation moyenne pour tous les appareils électriques connectés au réseau comprend :

- détermination de la présence d'un pic de consommation.

4. Procédé selon la revendication 3, dans lequel une minimisation desdits pics de consommation moyens comprend :

- minimisation des pics de consommation moyens attendus à des instants futurs par rapport à un instant présent, par des modifications de ladite séquence.

5. Procédé selon une ou plusieurs des revendications précédentes, dans lequel pour estimer localement une consommation d'électricité dans une fenêtre temporelle coulissante pour chaque prise intelligente, il comprend les étapes suivantes :

- mesure de la consommation électrique effective dudit appareil électrique au cours d'un intervalle de temps passé ;

- estimation du profil de consommation d'électricité dans une fenêtre de prévision, à partir desdites mesures effectuées au cours dudit intervalle de temps passé.

6. Procédé selon une ou plusieurs des revendications précédentes, dans lequel :

- chaque prise intelligente gère une étape d'identification dynamique des paramètres pour le correspondant appareil électrique à contrôle thermostatique.

7. Procédé selon une ou plusieurs des revendications précédentes, dans lequel l'étape d'estimation de la consommation moyenne future est réalisée selon un processus itératif modifiant la séquence d'activation et de désactivation de l'interrupteur de la prise intelligente pour alimenter l'appareil électrique, en recalculant et en mettant à jour l'estimation de la consommation moyenne future jusqu'à l'obtention d'un état stable dans lequel moins de variations de la consommation moyenne future sont présentes, qu'avant le processus itératif.

8. Procédé selon une ou plusieurs des revendications précédentes, dans lequel l'étape de prévision d'une consommation moyenne future, dans ladite fenêtre temporelle coulissante, pour les plusieurs appareils électriques, est effectuée par le contrôleur de toutes les prises intelligentes connectées dans un instant déterminé au réseau pair à pair.

9. Procédé selon une ou plusieurs des revendications précédentes, dans lequel chaque prise intelligente envoie ladite estimation à un sous-ensemble de prises intelligentes voisines desquelles elle possède l'adresse IP relative.

**10.** Architecture système (200) comprenant :

- une pluralité d'appareils électriques (2) comprenant :

• un premier ensemble de n appareils électriques de type à charge thermostatique contrôlée (TCL), avec n > 2 ;
• un deuxième ensemble de m appareils électriques non-TCL, avec m ≥ 0 ;

- une pluralité de prises intelligentes (1) indépendantes des appareils électriques, chaque prise intelligente étant associée à un appareil électrique, lesdites prises intelligentes comprenant un procédé autonome, des capacités de communication et de décision, et avec :

• un contrôleur (4) ;
• une unité de connexion (6) à un réseau ;
• un dispositif qui mesure la puissance (7) absorbée par l'appareil électrique associé ;
• un interrupteur (3) permettant d'activer ou de désactiver l'alimentation de l'appareil électrique associé ;

- lesdites prises intelligentes étant connectées à un réseau pair à pair (100), permettant des connexions point à point entre les prises intelligentes ;
- dans lequel ledit contrôleur (4) de chaque prise intelligente est programmé pour :

a) estimer un profil de consommation d'électricité futur, prévu sur une fenêtre temporelle de prévision divisée en plusieurs intervalles de temps, pour l'appareil électrique associé à la prise intelligente, ladite estimation étant calculée uniquement à partir de la consommation d'électricité précédente de l'appareil électrique et d'un modèle mathématique de ladite consommation ;
b) transmettre ladite estimation en utilisant ledit réseau P2P ;
c) prévoir un profil de consommation moyen sur ladite fenêtre temporelle coulissante future pour tous les appareils électriques connectés au réseau pair à pair, de manière coopérative, avec les contrôleurs des prises intelligentes connectées au réseau P2P échangeant des données locales ; le profil de consommation moyen étant obtenu en calculant une consommation des plusieurs appareils électriques à tout moment dans la fenêtre temporelle coulissante future, divisée par le nombre des appareils électrique, ainsi soulignant les pics de consommation de ladite fenêtre coulissante ;
d) pour chaque prise intelligente associée à un appareil électrique à charge thermostatique (TCL), à partir des informations relatives au profil de consommation moyen estimé par le réseau, calculer la planification des périodes d'activation et de désactivation des interrupteurs correspondants des prises intelligentes, afin d'alimenter les appareils électriques TCL associés et de minimiser les pics de consommation aux moments critiques, sur la période de prévision.

**11.** Architecture selon la revendication 10, dans laquelle ladite architecture ne nécessite ni d'un coordinateur central ni d'une base de données centrale, c'est-à-dire un emplacement où seraient collectées les informations d'estimation fournies par les prises intelligentes installées et communiquant avec ledit réseau.

**12.** Architecture selon la revendication 10 ou 11, dans laquelle ledit appareil électrique est un appareil électroménager.

**13.** Architecture selon la revendication 12, dans laquelle ledit appareil électroménager est un chauffe-eau.

**14.** Architecture selon une ou plusieurs des revendications 10 à 13, dans laquelle ladite architecture est une architecture distribuée.

**15.** Architecture selon la revendication 9, dans laquelle ladite unité de connexion (6) est un module capable d'échanger des messages de manière autonome et asynchrone avec au moins une autre unité de connexion (6) d'au moins un autre contrôleur (4) d'au moins une autre prise intelligente (1) correspondante.

FIG.1

100

FIG. 2

EP 3 582 365 B1

FIG. 3

FIG. 4

FIG.6

TIME INTERVALS I

FIG. 5

FIG.7

FIG.8

EP 3 582 365 B1

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20030225483 A
- US 9270115 B
- US 8626347 B
- US 6906617 B
- US 8204633 B
- EP 2639920 A

- US 2013262197 A
- US 2012166008 A
- US 20100382018 A
- US 2010050002 A
- US 6018690 A

**Non-patent literature cited in the description**

- **H. HAO ; B. SANANDAJI ; K. POOLLA ; T. VINCENT**. Aggregate flexibility of thermostatically controlled loads. *IEEE Trans. Power Systems*, 2015, vol. 30 (1), 189-198
- **S. GRAMMATICO ; B. GENTILE ; F. PARISE ; J. LYGEROS**. A mean field control approach for demand side management of large populations of thermostatically controlled loads. *IEEE European Control Conf.*, 2015, 3548-3553
- **BURGER, E. M. ; MOURA, S. J.** Generation following with thermostatically controlled loads via alternating direction method of multipliers sharing algorithm. *Electric Power Systems Research*, 2017, vol. 146, 141-160
- **M. FRANCESCHELLI ; A. GASPARRI ; A. PISANO**. *Coordination of electric thermal systems for distributed demand-side management: A gossip based cooperative approach*, 2016, 623-630
- **O. TAN ; J. GÓMEZ-VILARDEBÓ ; D. GÜNDÜZ**. Privacy-cost trade-offs in demand-side management with storage. *IEEE Trans. Inf. Forensics Security*, 2017, vol. 12 (6), 1458-1469

- **M. FRANCESCHELLI ; A. GASPARRI**. Multi-stage discrete time dynamic average consensus. *IEEE Conf. on Decision and Control*, 2016, 897-903
- **A. BEMPORAD ; M. MORARI**. Control of systems integrating logic, dynamics, and constraints. *Automatica*, 1999, vol. 35 (3), 407-427
- **M. FRANCESCHELLI ; A. GASPARRI**. Multi-stage discrete time dynamic average consensus. *IEEE Conf. On decision and Control*, 2016, 897-903
- **H. HAO ; B. SANANDAJI ; K. POOLLA ; T. VINCENT**. Aggregate flexibility of thermostatically controlled loads. *IEEE Trans. on Power Systems*, 2015, vol. 30 (1), 189-198
- **C. PERFUMO ; E. KOFMAN ; J. H. BRASLAVSKY ; J. K. WARD**. Load management: Model-based control of aggregate power for populations of thermostatically controlled loads. *Energy Conversion and Management*, 2012, vol. 55, 36-48
- **M. FRANCESCHELLI ; A. GASPARRI**. Multi-stage discrete time dynamic average consensus. *IEEE Conf. on Decision and Control*, 2016, 897-903